# EUROPÄISCHE PATENTSCHRIFT

(11) **EP 4 036 386 B1**
(45) Veröffentlichungstag und Bekanntmachung des Hinweises auf die Patenterteilung: **20.12.2023**
(21) Anmeldenummer: 22151298.1
(22) Anmeldetag: 13.01.2022
(51) Int. Cl.: F01N 3/20, F02B 37/18, F02B 37/013

(54) **VERBRENNUNGSKRAFTMASCHINE FÜR EIN KRAFTFAHRZEUG, INSBESONDERE FÜR EINEN KRAFTWAGEN, SOWIE KRAFTFAHRZEUG, INSBESONDERE KRAFTWAGEN**
COMBUSTION ENGINE FOR A MOTOR VEHICLE, IN PARTICULAR FOR A CAR AND MOTOR VEHICLE, IN PARTICULAR A CAR
MOTEUR À COMBUSTION INTERNE POUR VÉHICULE AUTOMOBILE, EN PARTICULIER POUR VÉHICULE À MOTEUR, AINSI QUE VÉHICULE AUTOMOBILE, EN PARTICULIER VÉHICULE À MOTEUR

(30) Priorität: 29.01.2021 DE 102021102029
(43) Veröffentlichungstag der Anmeldung: 03.08.2022
(73) Patentinhaber: Bayerische Motoren Werke Aktiengesellschaft, 80809 München (DE)
(72) Erfinder: Bruene, Hans-Juergen, 3350 Stadt Haag (AT); Weiss, Gerhard, 4493 Wolfern (AT); Waldhaeusl, Thomas, 4431 Dorf an der Enns (AT); Gruber, Willibald, 4400 Steyr (AT)

(56) Entgegenhaltungen:
- EP-B1- 1 728 989
- US-A1- 2012 216 529

## Beschreibung

Die Erfindung betrifft eine Verbrennungskraftmaschine für ein Kraftfahrzeug, insbesondere für einen Kraftwagen, gemäß dem Oberbegriff des Patentanspruchs 1. Des Weiteren betrifft die Erfindung ein Kraftfahrzeug, insbesondere einen Kraftwagen, mit einer solchen Verbrennungskraftmaschine.

Der DE 10 2011 005 654 A1 ist eine Brennkraftmaschine als bekannt zu entnehmen, mit einer zumindest einstufigen Abgasturboaufladung über mindestens einen Abgasturbolader und mit einer Abgasreinigung über einen Partikelfilter und einem SCR-Katalysator. Die US 9 328 642 B2 offenbart einen Verbrennungsmotor. Außerdem ist aus der DE 10 2016 202 235 A1 ein Verfahren zum Eindosieren eines Reduktionsmittels in einen Abgasstrang einer Verbrennungskraftmaschine bekannt. Ferner offenbart die US 2012/0216529 A1 einen Verbrennungsmotor. Des Weiteren ist aus der EP 1 728 989 B1 eine mehrstufige Turboladeranordnung bekannt.

Aufgabe der vorliegenden Erfindung ist es, eine Verbrennungskraftmaschine für ein Kraftfahrzeug sowie ein Kraftfahrzeug mit einer solchen Verbrennungskraftmaschine zu schaffen, sodass sich eine besonders vorteilhafte Abgasnachbehandlung realisieren lässt.

Diese Aufgabe wird erfindungsgemäß durch eine Verbrennungskraftmaschine mit den Merkmalen des Patentanspruchs 1 sowie durch das Kraftfahrzeug mit den Merkmalen des Patentanspruchs 14 gelöst. Vorteilhafte Ausgestaltungen der Erfindungen sind Gegenstand der abhängigen Ansprüche.

Ein erster Aspekt der Erfindung betrifft eine vorzugsweise als Hubkolbenmaschine beziehungsweise Hubkolbenmotor ausgebildete Verbrennungskraftmaschine für ein Kraftfahrzeug, insbesondere für einen vorzugsweise als Personenkraftwagen ausgebildeten Kraftwagen. Dies bedeutet, dass das Kraftfahrzeug in seinem vollständig hergestellten Zustand die Verbrennungskraftmaschine aufweist und mittels der Verbrennungskraftmaschine antreibbar ist. Vorzugsweise ist die Verbrennungskraftmaschine als ein Dieselmotor ausgebildet. Die Verbrennungskraftmaschine weist eine von Abgas die Verbrennungskraftmaschine durchströmbare Abgasanlage auf, welche auch als Abgastrakt bezeichnet wird. Die Abgasanlage weist ein von dem die Abgasanlage durchströmendem Abgas der Verbrennungskraftmaschine antreibbares, erstes Turbinenrad auf, welches beispielsweise Bestandteil einer ersten Turbine, insbesondere eines ersten Abgasturboladers, ist. Außerdem weist die Abgasanlage ein von dem die Abgasanlage durchströmenden Abgas der Verbrennungskraftmaschine antreibbares, zweites Turbinenrad auf, welches in Strömungsrichtung des die Abgasanlage durchströmenden Abgases stromab des ersten Turbinenrads angeordnet ist. Das zweite Turbinenrad ist beispielsweise Bestandteil einer zweiten Turbine, insbesondere eines zweiten Abgasturboladers. Da das zweite Turbinenrad stromab des ersten Turbinenrads angeordnet und zumindest in einem Betriebszustand der Verbrennungskraftmaschine zumindest von einem Teil des das erste Turbinenrad antreibenden Abgases antreibbar ist beziehungsweise angetrieben wird, sind die Turbinenräder zumindest in dem genannten Betriebszustand seriell zueinander angeordnet beziehungsweise geschaltet.

Die Abgasanlage weist mehrere, von dem Abgas durchströmbare Abgasnachbehandlungselemente auf, mittels welchen das Abgas nachbehandelt werden kann. Hierunter ist insbesondere zu verstehen, dass die Abgasnachbehandlungselemente dazu ausgebildet sind, wenigstens einen Bestandteil des Abgases aus dem Abgas zu entfernen. Hierfür können die Abgasnachbehandlungselemente für wenigstens eine chemische Reaktion katalytisch aktiv sein, das heißt die wenigstens eine Reaktion katalytisch bewirken und/oder unterstützen, in deren Rahmen wenigstens ein im Abgas enthaltener, erster Bestandteil mit wenigstens einem zweiten Stoff bzw. einer zweiten Substanz zu wenigstens einem dritten Bestandteil, mithin zu einem Produkt der Reaktion reagiert und/oder die Abgasnachbehandlungselemente können den Bestandteil aus dem Abgas herausfiltern.

Wenigstens eines der Abgasnachbehandlungselemente ist als ein SCR-Katalysator ausgebildet, welcher der in Strömungsrichtung des die Abgasanlage durchströmenden Abgases erste, von dem Abgas durchströmbare SCR-Katalysator die Abgasanlage ist. Dies bedeutet, dass das wenigstens eine Abgasnachbehandlungselement der erste SCR-Katalysator ist, wobei die Abgasanlage zusätzlich zu dem ersten SCR-Katalysator wenigstens ein weiteres oder mehrere weitere Abgasnachbehandlungselemente umfasst. Unter dem Merkmal, dass das wenigstens eine Abgasnachbehandlungselement der in Strömungsrichtung des die Abgasanlage durchströmenden Abgases erste, von dem Abgas durchströmbare SCR-Katalysator die Abgasanlage ist, ist insbesondere Folgendes zu verstehen: Die Abgasanlage und somit die Verbrennungskraftmaschine kann genau einen, das heißt einen einzigen SCR-Katalysator aufweisen, wobei dadurch, dass dann der genau eine SCR-Katalysator der einzige SCR-Katalysator der Abgasanlage ist, der genau eine SCR-Katalysator selbstverständlich der in Strömungsrichtung des die Abgasanlage durchströmenden Abgases erste, von dem Abgas durchströmbare SCR-Katalysator ist, mithin der SCR-Katalysator ist, der in Strömungsrichtung des die Abgasanlage befüllenden strömenden Abgases als erstes beziehungsweise zuerst von dem Abgas durchströmt wird. Ferner ist es denkbar, dass die Abgasanlage beziehungsweise die Verbrennungskraftmaschine wenigstens oder genau zwei oder demgegenüber mehr SCR-Katalysatoren aufweist, von denen einer der erste SCR-Katalysator ist. Mit anderen Worten, bezogen auf die beziehungsweise alle SCR-Katalysatoren der Abgasanlage ist das wenigstens eine Abgasnachbehandlungselement der in Strömungsrichtung des die Abgasanlage durchströmenden Abgases erste, von dem Abgas durchströmbare SCR-Katalysator, mithin der SCR-Katalysator, welcher bezogen auf die beziehungsweise alle SCR-Katalysatoren der Abgasanlage als erstes beziehungsweise zuerst von dem Abgas durchströmbar ist beziehungsweise durchströmt wird. Wenn im Folgenden die Rede von dem ersten SCR-Katalysator ist, so ist darunter der in Strömungsrichtung des die Abgasanlage durchströmenden Abgases erste, von dem Abgas durchströmbare SCR-Katalysator, mithin der SCR-Katalysator zu verstehen, der als erster beziehungsweise zuerst von dem Abgas durchströmbar ist beziehungsweise durchströmt wird. Die Verbrennungskraftmaschine stellt das Abgas beispielsweise während eines befeuerten Betriebs die Verbrennungskraftmaschine bereit, wobei während des befeuerten Betriebs in der Verbrennungskraftmaschine insbesondere in wenigstens einem Brennraum oder in anderen Brennräumen der Verbrennungskraftmaschine Verbrennungsvorgänge ablaufen. Bei dem jeweiligen Verbrennungsvorgang wird ein einfach auch als Gemisch bezeichnetes KraftstoffGemisch verbrannt.

Um nun einen besonders emissionsarmen Betrieb der Verbrennungskraftmaschine realisieren zu können, ist es erfindungsgemäß vorgesehen, dass die Verbrennungskraftmaschine wenigstens eine auch als Bypass oder als Bypass-Leitung bezeichnete Umgehungsleitung aufweist, die an einer auch erste Abzweigstelle bezeichneten Abzweigstelle und an einer auch als erste Einleitstelle bezeichneten Einleitstelle fluidisch mit der Abgasanlage verbunden ist. Dabei ist die erste Abzweigstelle in Strömungsrichtung des die Abgasanlage durchströmenden Abgases stromauf der ersten Einleitstelle und stromauf des ersten Turbinenrads angeordnet. Die erste Einleitstelle ist stromab des ersten SCR-Katalysators, das heißt stromab des wenigstens einen Abgasnachbehandlungselements angeordnet. Unter den Merkmalen, dass die Umgehungsleitung an der ersten Abzweigstelle und an der ersten Einleitstelle fluidisch mit der Abgasanlage verbunden ist, ist zu verstehen, dass mittels der Umgehungsleitung an der ersten Abzweigstelle zumindest ein Teil des die Abgasanlage durchströmenden Abgases aus der Abgasanlage abzweigbar und insbesondere in die Umgehungsleitung einleitbar ist. Das an der ersten Abzweigstelle aus der Abgasanlage abgezweigte und in die Umgehungsleitung eingeleitete Abgas ist unter Umgehung des ersten SCR-Katalysators mittels der Umgehungsleitung zu der ersten Einleitstelle zu führen und an ersten der Einleitstelle in die Abgasanlage einleitbar. Mit anderen Worten umgeht das die Umgehungsleitung durchströmende Abgas den ersten SCR-Katalysator, sodass das die Umgehungsleitung durchströmende Abgas nicht durch den ersten SCR-Katalysator hindurchströmt. Da somit zumindest der genannte Teil des Abgases um den ersten SCR-Katalysator herumgeführt werden kann, mithin den ersten SCR-Katalysator umgehen kann, kann der erste SCR-Katalysator beispielsweise vor übermäßigen, auch als Abgastemperaturen bezeichneten Temperaturen des Abgases geschützt werden. In der Folge ist es beispielsweise möglich, stromab des ersten SCR-Katalysators angeordnete Elemente und/oder Bereiche der Abgasanlage wie beispielsweise einen Partikelfilter mittels des Abgases schnell und/oder stark aufzuwärmen, ohne hierbei den ersten SCR-Katalysator übermäßig stark zu erhitzen. Dadurch können Schäden des ersten SCR-Katalysators sowie eine übermäßig schnelle Alterung des ersten SCR-Katalysator vermieden werden, wobei gleichzeitig die genannten Bereiche beziehungsweise Elemente vorteilhaft erwärmt werden können. In der Folge kann das Abgas besonders vorteilhaft nachbehandelt werden, sodass ein besonders emissionsarmer Betrieb realisiert werden kann.

Des Weiteren ist eine zweite Umgehungsleitung vorgesehen, welche zusätzlich zu der ersten Umgehungsleitung vorgesehen und insbesondere zumindest teilweise von der ersten Umgehungsleitung fluidisch getrennt ist. Die zweite Umgehungsleitung ist an einer stromauf des ersten Turbinenrads und stromab der Abzweigstelle angeordneten, zweiten Abzweigstelle und an einer stromauf des ersten SCR-Katalysators und stromab des ersten Turbinenrads angeordneten, zweiten Einleitstelle fluidisch mit der Abgasanlage verbunden, sodass mittels der zweiten Umgehungsleitung an der zweiten Abzweigstelle zumindest ein, insbesondere zweiter, Teil des die Abgasanlage durchströmenden Abgases aus der Abgasanlage abzweigbar, unter Umgehung des ersten Turbinenrads zu der zweiten Einleitstelle zu führen und an der zweiten Einleitstelle in die Abgasanlage einleitbar ist. Diesbezüglich hervorzuheben ist, dass die zweite Umgehungsleitung nicht oder nicht primär dazu verwendet wird, eine Leistung einer das zweite Turbinenrad umfassenden Turbine oder einen Ladedruck eines das zweite Turbinenrad umfassenden Abgasturboladers einzustellen oder zu regeln, sondern die zweite Umgehungsleitung wird insbesondere dazu genutzt, insbesondere bei einem Kaltstart der Verbrennungskraftmaschine, den erste SCR-Katalysator schnell aufzuwärmen und dadurch auf oder über seine auch als Light-off-Temperatur bezeichnete Anspringtemperatur zu bringen, indem das Abgases beziehungsweise zumindest ein Teilstrom des Abgases mittels der zweiten Umgehungsleitung an dem ersten Turbinenrad vorbeigeführt wird, sodass der Teilstrom die Turbine nicht antreibt und somit nicht übermäßig viel Enthalpie verliert, sondern eine vorteilhaft hohe Temperatur aufweist oder beibehält, um den ersten SCR-Katalysator schnell aufheizen zu können. Dadurch kann ein besonders emissionsarmer Betrieb realisiert werden.

Um dabei einen besonders effizienten und emissionsarmen Betrieb der Verbrennungskraftmaschine realisieren zu können, ist es bei einer Ausführungsform der Erfindung vorgesehen, dass die erste Einleitstelle stromauf der zweiten Turbinenrads angeordnet ist.

Bei einer weiteren, besonders vorteilhaften Ausführungsform der Erfindung ist es vorgesehen, dass mit Ausnahme des ersten SCR-Katalysators alle Abgasnachbehandlungselemente der Abgasanlage stromab des zweiten Turbinenrads angeordnet sind. Der Erfindung liegen insbesondere die folgenden Erkenntnisse und Überlegungen zugrunde: Moderne, beispielsweise als Dieselmotoren ausgebildete Verbrennungskraftmaschinen arbeiten mit sehr hohen Wirkungsgraden und damit verbunden mit sehr niedrigen Abgastemperaturen. Alle stromab einer Turbine oder von, insbesondere allen, Turbinen angeordneten, katalytisch aktiven Bauteile werden üblicherweise nach einem Kaltstart und in einem niederlastigen Fahrbetrieb nicht hinreichend warm, um hinreichend katalytisch aktiv zu werden. Eine jeweilige katalytische Aktivität einer Abgasnachbehandlungskomponente wird maßgeblich von deren Betriebstemperatur bestimmt, da üblicherweise erst oberhalb einer auch als light-off-Temperatur oder Anspringtemperatur bezeichneten Grenztemperatur sich ein hinreichend großer Schadstoff-Umsatz einstellt. Aus diesem Grund ist es vorteilhaft, eine beispielsweise katalytisch aktive Abgasnachbehandlungskomponente schnell und ausreichend Abgastemperatur zur Verfügung zu stellen, mithin die Abgasnachbehandlungskomponente schnell und hinreichend stark mittels des Abgases zu erwärmen, um Emissionen, insbesondere Rohemissionen, bereits ab dem Kaltstart oder kurze Zeit nach dem Kaltstart zumindest nahezu vollständig umsetzen zu können. Wenn im Folgenden die Rede von dem SCR-Katalysator ist, so ist darunter, falls nichts anderes angegeben ist, der erste SCR-Katalysator zu verstehen.

Aus diesem Grund sind herkömmlicherweise umfangreiche Thermo-Management-Maßnahmen in einem Motorsteuergerät zum Betreiben, insbesondere Regeln oder Steuern, der Verbrennungskraftmaschine appliziert, um die Abgastemperatur hinreichend schnell und dauerhaft über die zuvor genannte, auch als Mindesttemperatur bezeichnete Anspringtemperatur zu bringen und schließlich die Abgasnachbehandlungskomponente zumindest auf die Anspringtemperatur aufzuheizen. Die Thermo-Management-Maßnahmen sind somit sogenannte Heizmaßnahmen zum Aufheizen beziehungsweise Erwärmen der Abgasnachbehandlungskomponente. Herkömmlicherweise sind die Heizmaßnahmen jedoch mit einem Kraftstoff-Mehrverbrauch somit mit einem erhöhten COz-Ausstoß verbunden. Wünschenswert ist es jedoch, den Kraftstoffverbrauch und somit die COz-Emissionen möglichst gering zu halten.

Des Weiteren ist eine, insbesondere katalytisch wirksame, Abgasnachbehandlungskomponente in einem gewissen Betriebsbereich besonders wirksam, insbesondere dahingehend, dass die Abgasnachbehandlungskomponente in dem genannten Betriebsbereich einen vorteilhaft hohen Umsatzgrad aufweist. Beispielsweise beginnt der Betriebsbereich bei der Anspringtemperatur, wobei der Betriebsbereich nach oben begrenzt ist. Der, insbesondere erste, SCR-Katalysator ist dazu ausgebildet, eine selektive katalytische Reduktion (SCR) katalytisch zu unterstützen und/oder zu bewirken. Durch die in dem ersten SCR-Katalysator ablaufende und durch den SCR-Katalysator katalytisch bewirkte und/oder unterstützte, selektive katalytische Reduktionen werden im Abgas etwaig enthaltende Stickoxide (NOₓ) derart umgesetzt beziehungsweise aus dem Abgas zumindest teilweise entfernt, dass bei der SCR im Abgas enthaltene Stickoxide mit Ammoniak zu Stickstoff und Wasser reagieren beziehungsweise umgesetzt werden. Der Ammoniak stammt aus einem insbesondere flüssigen Reduktionsmittel beziehungsweise wird von einem insbesondere flüssigen Reduktionsmittel bereitgestellt, wobei das Reduktionsmittel beispielsweise mittels einer Dosiereinrichtung in die Abgasanlage beziehungsweise in das Abgas eingebracht, insbesondere eingespritzt, wird. Im Hinblick auf den Betriebsbereich, dessen Begrenzung nach oben und SCR-Katalysatoren bricht beispielsweise der Schadstoff-Umsatz von SCR-Katalysatoren oberhalb von zum Beispiel 600°C deutlich ein, weil das Reduktionsmittel durch im Abgas enthaltenen Rest-Sauerstoff oxidiert wird, bevor es eine reduzierende Wirkung an beziehungsweise in SCR-Katalysator entfalten können, insbesondere im Hinblick auf den Ammoniak. Außerdem altern alle, insbesondere katalytisch aktive, Abgasnachbehandlungskomponenten oberhalb bestimmter Temperatur-Grenzen, wie zum Beispiel 800°C, wodurch der Betriebsbereich auf eine bestimmte Bandbreite eingeschränkt ist. Mit anderen Worten ist es vorteilhaft, übermäßig hohe Temperaturen einer Abgasnachbehandlungskomponente wie beispielsweise eines SCR-Katalysators zu vermeiden. Dies kann nun in Hinblick auf den wenigstens einen SCR-Katalysator besonders vorteilhaft gewährleistet werden, da zumindest der zuvor genannte Teil des Abgases den wenigstens einen SCR-Katalysator umgehen kann.

Weitere, der Erfindung zugrundeliegende Erkenntnisse und Überlegungen sind, dass ein in einer Abgasanlage einer Verbrennungskraftmaschine angeordnete Turbinen beziehungsweise deren Turbinenrad und somit eine Abgasturboaufladung einen wesentlichen Teil von dem Abgas enthaltener Energie entnimmt, da das Abgas das Turbinenrad antreibt. Somit ist die Temperatur des Abgases stromab des Turbinenrads deutlich geringer als stromauf des Turbinenrads. Dies kann zur Folge haben, dass alle stromab des Turbinenrads, insbesondere des in Strömungsrichtung des die Abgasanlage durchströmenden Abgases letzten Turbinenrads angeordneten, insbesondere katalytisch aktiven Abgasnachbehandlungskomponenten von deutlich kühlerem Abgas beaufschlagt werden als dies stromauf des Turbinenrads, insbesondere der in Strömungsrichtung des die Abgasanlage durchströmenden, ersten Turbinenrads der Fall wäre. Daraus kann gefolgert werden, Abgasnachbehandlungskomponenten, insbesondere katalytisch aktive Abgasnachbehandlungskomponenten beziehungsweise Bauteile hinter, das heißt stromab des in Strömungsrichtung des die Abgasanlage durchströmenden Abgases letzten Turbinenrads anzuordnen, um den Betriebsbereich bei hoher Motorlast und somit hoher Abgastemperatur möglichst groß zu halten. Diesbezüglich kann vorgesehen sein, dass das zweite Turbinenrad der erfindungsgemäßen Verbrennungskraftmaschine das in Strömungsrichtung des die Abgasanlage schonenden Abgases letzte Turbinenrad das Turbinenrad ist, welches in Strömungsrichtung des die Abgasanlage schonenden Abgases als letztes beziehungsweise zuletzt von dem Abgas angetrieben wird. Nachteilig an einer Anordnung der beziehungsweise aller Abgasnachbehandlungskomponenten stromab des letzten Turbinenrads ist hingegen ein spätes Anspringen der insbesondere katalytisch aktiven Abgasnachbehandlungskomponente, sodass in einem niederlastigen Fahrbetrieb Heizmaßnahmen intensiv eingesetzt werden müssen, um die Abgasnachbehandlungskomponenten hinreichend stark und hinreichend schnell aufheizen und insbesondere über deren Anspringtemperatur bringen zu können.

Eine weitere Möglichkeit ist, die beziehungsweise alle Abgasnachbehandlungskomponenten möglichst motornah und beispielsweise derart zu positionieren beziehungsweise anzuordnen, dass die beziehungsweise alle, insbesondere alle katalytisch aktive, Abgasnachbehandlungskomponenten stromauf des in Strömungsrichtung des die Abgasanlage durchströmenden Abgases ersten Turbinenrads angeordnet werden. Nachteilig hierbei kann jedoch sein, dass die Abgastemperaturen bereits bei mittleren Lasten der Verbrennungskraftmaschine zulässige Temperaturobergrenzen nach oben überschreiten, sodass die insbesondere katalytisch aktiven Abgasnachbehandlungskomponenten an Effektivität verlieren und stark altern. Um eine thermische Überlastung von stromauf des in Strömungsrichtung des die Abgasanlage durchströmenden Abgases ersten Turbinenrads angeordneten Abgasnachbehandlungskomponenten zu vermeiden, kann eine Bypassvorrichtung mit einer Bypassleitung und einem Bypassventil vorgesehen werden, sodass diese Abgasnachbehandlungskomponenten über die Bypassleitung von Abgas umgangen werden können.

Die Erfindung vereint nun die Vorteile beider Anwendungen, mithin die Vorteile der Anordnung von Abgasnachbehandlungskomponenten stromab des zweiten beziehungsweise letzten Turbinenrads mit den Vorteilen der Anordnung von Abgasnachbehandlungskomponenten stromab eines Turbinenrads, derart, dass der erste SCR-Katalysator stromauf des zweiten Turbinenrads und stromab des ersten Turbinenrads, mithin zwischen den Turbinenrädern angeordnet ist, während alle anderen, zum Nachbehandeln des die Abgasanlage durchströmenden Abgases ausgebildeten und insbesondere katalytisch wirksamen und/oder zum Filtern von Partikeln aus dem Abgas ausgebildeten Abgasnachbehandlungselemente beziehungsweise -komponenten der Abgasanlage stromab des zweiten Turbinenrads und somit stromab des erste SCR-Katalysators angeordnet sind. Damit ist stromab des üblicherweise klein ausgeführten, ersten Turbinenrads ein Temperaturverlust in einer Aufheizphase, insbesondere nach einem Kaltstart und in einem Niederlastbereich gering, die Ausweitung des Betriebsbereichs nach oben hin aber deutlich ausgeweitet im Vergleich zu herkömmlichen Lösungen.

Um einen besonders emissionsarmen Betrieb realisieren zu können, ist es bei einer Ausführungsform der Erfindung vorgesehen, dass ein weiteres bzw. zweites der Abgasnachbehandlungselemente als ein beziehungsweise der zuvor genannte, stromab des zweiten Turbinenrads angeordnete Partikelfilter ausgebildet. Mit anderen Worten ist der erste SCR-Katalysator ein erstes Abgasnachbehandlungselement, und der Partikelfilter ist ein zusätzlich zu dem ersten SCR-Katalysator vorgesehenes, zweites Abgasnachbehandlungselement, mittels welchem Partikel, insbesondere Rußpartikel, besonders vorteilhaft aus dem Abgas herausgefiltert werden können. Insbesondere kann es sich bei dem Partikelfilter um einen Dieselpartikelfilter (DPF) handeln, sodass die Verbrennungskraftmaschine vorzugsweise als ein Dieselmotor ausgebildet ist.

Durch die Erfindung kann das technische Problem beziehungsweise der Zielkonflikt gelöst werden, den ersten SCR-Katalysator und das wenigstens eine weitere oder die weiteren Abgasnachbehandlungselemente bzw. -komponenten einerseits hinreichend schnell auf ihre jeweilige Betriebstemperatur zu bringen, mithin die als Temperatur-Untergrenze fungierende Anspringtemperatur zu erreichen oder zu überschreiten, und andererseits während des gesamten Fahrbetriebs jeweilige, zulässige Temperaturgrenzen, insbesondere bei hoher Motorlast, nicht zu überschreiten. Hierzu ist es erfindungsgemäß vorgesehen, dass mit Ausnahme des ersten SCR-Katalysators alle von dem Abgas durchströmbaren und zum Nachbehandeln des die Abgasanlage durchströmenden Abgases ausgebildeten und auch als Abgasnachbehandlungskomponenten bezeichneten und beispielsweise zum Herausfiltern von Partikeln aus dem Abgas ausgebildeten und/oder katalytisch wirksamen Abgasnachbehandlungselemente der Abgasanlage stromab des zweiten Turbinenrads angeordnet sind.

Somit weist die Abgasanlage wenigstens ein zusätzlich zu dem wenigstens einen SCR-Katalysator vorgesehenes, zum Nachbehandeln des die Abgasanlage durchströmenden Abgases ausgebildetes Abgasnachbehandlungselement auf. Ganz vorzugsweise weist die Abgasanlage mehrere, zusätzlich zu dem wenigstens einen SCR-Katalysator vorgesehene und zum Nachbehandeln des die Abgasanlage durchströmenden Abgases ausgebildete Abgasnachbehandlungselemente auf, wobei das weitere Abgasnachbehandlungselement beziehungsweise alle weiteren Abgasnachbehandlungselemente der Abgasanlage stromab des zweiten Turbinenrads angeordnet sind. Vorzugsweise ist es vorgesehen, dass das zweite Turbinenrad das in Strömungsrichtung des die Abgasanlage durchströmenden Abgases letzte, von dem Abgas antreibbare Turbinenrad ist. Somit weist die Abgasanlage vorzugsweise genau zwei Turbinen in Form des zuvor genannten, ersten Turbinenrads und des zuvor genannten zweiten Turbinenrads auf. Vorzugsweise ist es vorgesehen, dass die erste Einleitstelle stromauf des zweiten Turbinenrads angeordnet ist.

Um einen besonders emissionsarmen Betrieb realisieren zu können, ist es vorzugsweise vorgesehen, dass der Partikelfilter stromab der ersten Einleitstelle angeordnet ist. Dadurch kann der Partikelfilter dadurch vorteilhaft erwärmt werden, dass eine besonders hohe Temperatur des Abgases eingestellt beziehungsweise bewirkt wird, sodass der Partikelfilter mittels des Abgases hinreichend stark erwärmt und somit regeneriert werden kann. Da das Abgas den ersten SCR-Katalysator über die erste Umgehungsleitung umgehen kann, kann insbesondere dann, wenn der Partikelfilter regeneriert wird, eine übermäßig starke Erwärmung des ersten SCR-Katalysators vermieden werden. Um einen besonders emissionsarmen Betrieb realisieren zu können, ist es in weiterer Ausgestaltung der Erfindung vorgesehen, dass ein weiteres der Abgasnachbehandlungselemente als ein Ammoniak-Schlupfkatalysator ausgebildet ist, welcher stromauf des zweiten Turbinenrads und stromab des ersten Turbinenrads angeordnet ist.

In weiterer Ausgestaltung der Erfindung ist es vorgesehen, dass ein weiteres der Abgasnachbehandlungselemente als ein elektrisch beheizbarer Katalysator ausgebildet ist, welcher stromab des ersten Turbinenrads und stromauf des zweiten Turbinenrads angeordnet ist. Dadurch kann ein besonders emissionsarmer Betrieb dargestellt werden.

Schließlich zeichnet sich eine weitere Ausführungsform dadurch aus, dass das Abgas einen aus dem wenigstens einen Brennraum der Verbrennungskraftmaschine stammenden Kraftstoffkatalysator (FBC - Fuel Borne Catalyst) enthält, welcher einem in den Brennraum eingebrachten und zum Betreiben der Verbrennungskraftmaschine in dem befeuerten Betrieb der Verbrennungskraftmaschine vorgesehenen beziehungsweise verwendeten Kraftstoff beigemischt ist oder aus einem dem Kraftstoff beigemischten Additiv resultiert. Hierdurch kann ein besonders emissionsarmer Betrieb realisiert werden.

Eine weitere Ausführungsform zeichnet sich dadurch aus, dass ein weiteres oder drittes der Abgasnachbehandlungselemente als ein zweiter, stromab des zweiten Turbinenrads angeordneter SCR-Katalysator ausgebildet ist. Dies bedeutet, dass der zweite SCR-Katalysator zusätzlich zu dem ersten SCR-Katalysator vorgesehen und ganz vorzugsweise von dem ersten SCR-Katalysator beabstandet ist. Mittels des zweiten SCR-Katalysators kann das Abgas besonders vorteilhaft entstickt werden. Unter dem Entsticken des Abgases ist zu verstehen, dass - wie zuvor beschrieben - im Abgas enthaltene Stickoxide aus dem Abgas zumindest teilweise entfernt werden, indem die im Abgas etwaig enthaltenen Stickoxide bei der SCR mit Ammoniak zu Stickstoff und Wasser reagieren.

Das Kraftfahrzeug weist beispielsweise einen insbesondere als selbsttragende Karosserie ausgebildeten Aufbau auf, welcher beispielsweise einen Motorraum zumindest teilweise begrenzt beziehungsweise bildet. Dabei ist die Verbrennungskraftmaschine in dem Motorraum angeordnet. Der erste SCR-Katalysator ist beispielsweise ein motornaher Katalysator, der zumindest teilweise, insbesondere zumindest überwiegend und somit zu mehr als zur Hälfte oder vollständig, in dem Motorraum angeordnet ist. Dabei ist es denkbar, dass das erste Turbinenrad in dem Motorraum angeordnet ist. Demgegenüber ist der zweite SCR-Katalysator beispielsweise ein Unterboden-Katalysator, welcher zumindest überwiegend, insbesondere vollständig, außerhalb des Motorraums angeordnet ist. Beispielsweise ist der zweite SCR-Katalysator in Fahrzeughochrichtung unterhalb eines einfach auch als Boden bezeichneten Unterbodens des Aufbaus angeordnet. Der Aufbau bildet beziehungsweise begrenzt einen auch als Fahrgastraum oder Fahrgastzelle bezeichneten Innenraum des Kraftfahrzeugs, in dessen Innenraum sich Personen währen einer Fahrt des Kraftfahrzeugs aufhalten können. Dabei ist der Innenraum in Fahrzeughochrichtung nach unten hin zumindest teilweise, insbesondere zumindest überwiegend oder vollständig, durch den genannten Boden des Aufbaus begrenzt. Dabei ist der zweite SCR-Katalysator beispielsweise derart in Fahrzeughochrichtung unterhalb des Bodens angeordnet, dass der zweite SCR-Katalysator in Fahrzeughochrichtung nach oben hin zumindest teilweise, insbesondere zumindest überwiegend vollständig, durch den Boden überdeckt beziehungsweise überlappt ist.

Um dabei einen besonders emissionsarmen Betrieb realisieren zu können, ist es in weiterer Ausgestaltung der Erfindung vorgesehen, dass der zweite SCR-Katalysator stromab des Partikelfilters angeordnet ist. Dadurch kann der Partikelfilter bedarfsgerecht regeneriert werden, ohne dass es zu übermäßigen Temperaturen des zweiten SCR-Katalysators kommt.

Bei einer weiteren, besonders vorteilhaften Ausführungsform der Erfindung ist es vorgesehen, dass ein weiteres beziehungsweise viertes der Abgasnachbehandlungselemente als ein stromab des zweiten Turbinenrads angeordneter Oxidationskatalysator ausgebildet ist. Dies bedeutet, dass der Oxidationskatalysator ein zusätzlich zu dem ersten SCR-Katalysator vorgesehenes, insbesondere viertes, Abgasnachbehandlungselement ist, mittels welchem das Abgas nachbehandelt werden kann. Insbesondere dann, wenn die Verbrennungskraftmaschine ein Dieselmotor ist, ist der Oxidationskatalysator beispielsweise ein Diesel-Oxidationskatalysator (DOC). Dadurch kann das Abgas besonders gut nachbehandelt werden. Vorzugsweise ist der Oxidationskatalysator stromauf des Partikelfilters angeordnet.

Als weiterhin besonders vorteilhaft hat es sich gezeigt, wenn der Oxidationskatalysator stromauf des zweiten SCR-Katalysators angeordnet ist. Dadurch kann eine besonders vorteilhafte Abgasnachbehandlung gewährleistet werden.

Um das Abgas besonders vorteilhaft und bedarfsgerecht entsticken zu können, ist es vorzugsweise vorgesehen, dass die Verbrennungskraftmaschine wenigstens eine Dosiereinrichtung aufweist, mittels welcher an einer stromauf des ersten SCR-Katalysators angeordneten Einbringstelle und/oder an einer stromab des ersten SCR-Katalysators und stromauf des zweiten SCR-Katalysators angeordneten, zweiten Einbringstelle ein beziehungsweise das zuvor genannte Reduktionsmittel zum Entsticken des Abgases in das Abgas einbringbar beziehungsweise einspritzbar, ist. Das Reduktionsmittel ist beispielsweise ein flüssiges Reduktionsmittel, insbesondere eine wässrige Harnstofflösung. Insbesondere ist das Reduktionsmittel dazu ausgebildet, Ammoniak bereitzustellen, mit dem bei der SCR im Abgas enthaltene Stickoxide zu Stickstoff und Wasser reagieren können.

Ein zweiter Aspekt der Erfindung betrifft ein vorzugsweise als Kraftwagen, insbesondere als Personenkraftwagen, ausgebildetes Kraftfahrzeug, welches eine Verbrennungskraftmaschine gemäß dem ersten Aspekt der Erfindung aufweist und insbesondere mittels der Verbrennungskraftmaschine antreibbar ist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Weitere Einzelheiten der Erfindung ergeben sich aus der nachfolgenden Beschreibung eines bevorzugten Ausführungsbeispiels mit der zugehörigen Zeichnung.

Dabei zeigt:
- Fig. 1: eine schematische Darstellung einer erfindungsgemäßen Verbrennungskraftmaschine gemäß einer ersten Ausführungsform für ein Kraftfahrzeug;
- Fig. 2: eine schematische Darstellung der Verbrennungskraftmaschine gemäß einer zweiten Ausführungsform;
- Fig. 3: eine schematische Darstellung der Verbrennungskraftmaschine gemäß einer dritten Ausführungsform; und
- Fig. 4: eine schematische Darstellung der Verbrennungskraftmaschine gemäß einer vierten Ausführungsform.

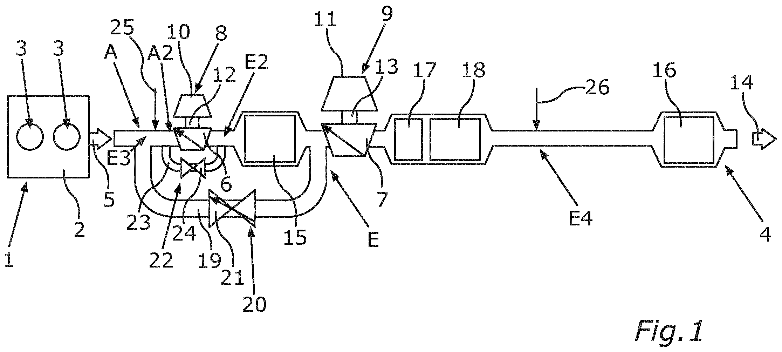

Fig. 1 zeigt in einer schematischen Darstellung eine erste Ausführungsform einer als Hubkolbenmotor beziehungsweise Hubkolbenmaschine ausgebildeten Verbrennungskraftmaschine 1 für ein Kraftfahrzeug. Dies bedeutet, dass das vorzugsweise als Kraftwagen, insbesondere als Personenkraftwagen, ausgebildete Kraftfahrzeug in seinem vollständig hergestellten Zustand die Verbrennungskraftmaschine 1 aufweist und mittels der Verbrennungskraftmaschine 1 antreibbar ist. Die Verbrennungskraftmaschine 1 weist ein beispielsweise als Zylindergehäuse, insbesondere als Zylinderkurbelgehäuse, ausgebildetes Motorgehäuse 2 auf, durch welches Brennräume 3 der Verbrennungskraftmaschine 1 jeweils zumindest teilweise begrenzt sind. Während eines befeuerten betrieb der Verbrennungskraftmaschine 1 laufen in den Brennräumen 3 Verbrennungsvorgänge ab, woraus Abgas der Verbrennungskraftmaschine 1 resultiert.

Die Verbrennungskraftmaschine 1 weist eine von dem Abgas durchströmbare und auch als Abgastrakt bezeichnete Abgasanlage 4 auf. Wie in Fig. 1 durch einen Pfeil 5 veranschaulicht ist, kann das Abgas aus den Brennräumen 3 ausströmen, in die Abgasanlage 4 einströmen und in der Folge die Abgasanlage 4 durchströmen. Die von dem Abgas durchströmbare Abgasanlage 4, insbesondere die Verbrennungskraftmaschine 1 insgesamt, weist genau zwei von dem die Abgasanlage 4 durchströmenden Abgas antreibbare Turbinenräder 6 und 7 auf, wobei das Turbinenrad 6 auch als erstes Turbinenrad und das Turbinenrad 7 auch als zweites Turbinenrad bezeichnet werden. Das Turbinenrad 6 ist Bestandteil eines ersten Abgasturboladers 8, und das Turbinenrad 7 ist Bestandteil eines zweiten Abgasturboladers 9. Der Abgasturbolader 8 umfasst ein erstes Verdichterrad 10 und der Abgasturbolader 9 umfasst ein zweites Verdichterrad 11. Die Verdichterräder 10 und 11 sind in einem in Fig. 1 nicht dargestellten und auch als Einlasstrakt bezeichneten Ansaugtrakt der Verbrennungskraftmaschine 1 angeordnet, wobei der Ansaugtrakt von Luft durchströmbar ist. Mittels des Ansaugtrakts wird die den Ansaugtrakt durchströmende Luft zu den und in die Brennräume 3 geleitet. Außerdem wird ein insbesondere flüssiger Kraftstoff in den jeweiligen Brennraum 3 eingebracht, insbesondere direkt eingespritzt. Hierdurch wird ein einfach auch als Gemisch bezeichnetes Kraftstoff-Luft-Gemisch gebildet, welches die genannte Luft und den genannten Kraftstoff umfasst und bei dem jeweiligen Verbrennungsvorgang in dem jeweiligen Brennraum 3 verbrannt wird. Vorzugsweise ist die Verbrennungskraftmaschine 1 ein Dieselmotor, sodass der Kraftstoff ein Dieselkraftstoff ist. Das jeweilige Verdichterrad 10 beziehungsweise 11 ist, insbesondere über eine jeweilige Welle 12 beziehungsweise 13 des jeweiligen Abgasturboladers 8 beziehungsweise 9, von dem jeweiligen Turbinenrad 6 beziehungsweise 7 antreibbar, welches wiederum von dem die Abgasanlage 4 durchströmenden Abgas antreibbar ist. Durch Antreiben des jeweiligen Verdichterrads 10 beziehungsweise 11 wird mittels des jeweiligen Verdichterrads 10 beziehungsweise 11 die den Ansaugtrakt durchströmende Luft verdichtet. In Strömungsrichtung der den Ansaugtrakt durchströmenden Luft ist das Verdichterrad 10 stromab des Verdichterrads 11 angeordnet, wobei die Verdichterräder 10 und 11 zumindest in einem Betriebszustand der Verbrennungskraftmaschine 1 seriell zueinander angeordnet beziehungsweise geschaltet, das heißt in Reihe angeordnet beziehungsweise geschaltet sind. Das Verdichten der Luft wird auch als Aufladen oder Aufladung bezeichnet. Da die Verdichterräder 10 und 11 in Reihe zueinander geschaltet sind, ist eine genau zweistufige Aufladung der Verbrennungskraftmaschine 1 vorgesehen.

In Strömungsrichtung des die Abgasanlage 4 durchströmenden Abgases, dessen Strömungsrichtung in Fig. 1 durch den Pfeil 5 und durch einen weiteren Pfeil 14 veranschaulicht ist, ist das Turbinenrad 7 stromab des Turbinenrads 6 angeordnet beziehungsweise das Turbinenrad 6 ist stromauf des Turbinenrads 7 angeordnet, wobei die Turbinenräder 6 und 7 zumindest in dem zuvor genannten Betriebszustand und/oder zumindest in einem weiteren Betriebszustand seriell zueinander angeordnet beziehungsweise geschaltet, das heißt in Reihe angeordnet beziehungsweise geschaltet sind. Hierunter ist insbesondere zu verstehen, dass zumindest ein Teil des das Turbinenrad 6 antreibenden Abgases auch das Turbinenrad 7 antreibt, nachdem der Teil das Turbinenrad 6 angetrieben hat. Das jeweilige Turbinenrad 6 beziehungsweise 7 kann Bestandteil einer jeweiligen Turbine des jeweiligen Abgasturboladers 8 beziehungsweise 9 sein. Beispielsweise kann die jeweilige Turbine eine variable Turbinengeometrie aufweisen.

Die Abgasanlage 4 weist genau zwei SCR-Katalysatoren 15 und 16 auf, wobei die SCR-Katalysatoren 15 und 16 von dem Abgas durchströmbare und katalytisch wirksame Abgasnachbehandlungselemente sind, mittels welchen das Abgas nachbehandelt wird beziehungsweise nachbehandelt werden kann. Des Weiteren umfasst die Abgasanlage 4 einen Oxidationskatalysator 17 und einen Partikelfilter 18 als weitere Abgasnachbehandlungselemente zum Nachbehandeln des Abgases. Der Oxidationskatalysator 17 ist ein katalytisch wirksame bzw. aktives Abgasnachbehandlungselement, da der Oxidationskatalysator - wie auch der jeweilige SCR-Katalysator 15 bzw. 16 - wenigstens eine jeweilige chemische Reaktion katalytisch unterstützen und/oder bewirken kann, in deren Rahmen wenigstens ein jeweiliger Bestandteil des Abgases mit wenigstens einem weiteren Stoff zu einem Produkt der Reaktion reagiert und dadurch aus dem Abgas entfernt wird. Im Hinblick auf den jeweiligen SCR-Katalysator 15 bzw. 16 handelt es sich bei dem Bestandteil um im Abgas enthaltene Stickoxid, und im Hinblick auf den Oxidationskatalysator 17 handelt es sich beispielsweise um im Abgas enthaltene, unverbrannte Kohlenwasserstoffe (HC). Auch der Partikelfilter 18 ist dazu ausgebildet, wenigstens einen Bestandteil des Abgases aus dem Abgas zu entfernen. Im Hinblick auf den Partikelfilter 18 ist der Bestandteil Partikel, insbesondere Rußpartikel, die mittels des Partikelfilters 18 aus dem Abgas herausgefiltert werden bzw. werden können. Die Abgasnachbehandlungselemente sind somit dazu ausgebildet, wenigstens einen Bestandteil des Abgases aus dem Abgas zu entfernen.

Da die Verbrennungskraftmaschine 1 beispielsweise als Dieselmotor ausgebildet ist, ist der Oxidationskatalysator 17 beispielsweise ein Dieseloxidationskatalysator (DOC), wobei der Partikelfilter 18 beispielsweise ein Dieselpartikelfilter (DPF) ist. Es ist erkennbar, dass die Abgasanlage 4 beziehungsweise die Verbrennungskraftmaschine 1 insgesamt genau vier Abgasnachbehandlungselemente umfasst. Ein erstes der Abgasnachbehandlungselemente ist der SCR-Katalysator 15, ein zweites der Abgasnachbehandlungselemente ist der SCR-Katalysator 16, ein drittes der Abgasnachbehandlungselemente ist der Oxidationskatalysator 17 und das vierte Abgasnachbehandlungselement ist der Partikelfilter 18. In Strömungsrichtung des die Abgasanlage 4 durchströmenden Abgases ist der SCR-Katalysator 15 der erste, von dem Abgas durchströmbare SCR-Katalysator, da der zweite SCR-Katalysator 16 beziehungsweise alle anderen, weiteren SCR-Katalysatoren der Abgasanlage 4 in Strömungsrichtung des die Abgasanlage 4 durchströmenden Abgases stromab des ersten SCR-Katalysators 15 angeordnet ist beziehungsweise sind. Dabei ist der erste SCR-Katalysator 15 zwischen den Turbinenrädern 6 und 7, mithin stromauf des Turbinenrads 7 und stromab des Turbinenrads 6 angeordnet.

Um nun einen besonders emissionsarmen Betrieb der Verbrennungskraftmaschine 1 ermöglichen und dabei übermäßig hohe Temperaturen der Abgasnachbehandlungselemente vermeiden zu können, sind mit Ausnahme des SCR-Katalysators 15 alle Abgasnachbehandlungselemente der Abgasanlage 4 stromab des zweiten Turbinenrads 7 angeordnet. Dies bedeutet, dass der Oxidationskatalysator 17, der Partikelfilter 18 und der zweite SCR-Katalysator 16 stromab des Turbinenrads 7 angeordnet ist, während der SCR-Katalysator 15 stromauf des Turbinenrads 7 aber stromab des Turbinenrads 6 angeordnet ist.

Um beispielsweise den Partikelfilter 18 bedarfsgerecht und vorteilhaft regenerieren und dabei jedoch übermäßig hohe Temperaturen des SCR-Katalysators 15 vermeiden zu können, weist die Verbrennungskraftmaschine 1 einen Umgehungsleitung 19 auf. Die Umgehungsleitung 19 ist an einer Abzweigstelle A und an einer Einleitstelle E fluidisch mit der Abgasanlage 4 verbunden, wobei die Abzweigstelle A stromauf des SCR-Katalysators 15, insbesondere stromauf des Turbinenrads 6, angeordnet ist, und die Einleitstelle E ist stromab des SCR-Katalysators 15 und insbesondere stromauf des Turbinenrads 7 und somit stromauf der anderen, zusätzlich zu dem SCR-Katalysator 15 vorgesehenen Abgasnachbehandlungselemente in Form des Oxidationskatalysators 17, des Partikelfilters 18 und des zweiten SCR-Katalysators 16 angeordnet. Mittels der Umgehungsleitung 19 kann an der Abzweigstelle A zumindest ein Teil des die Abgasanlage 4 durchströmenden Abgases aus der Abgasanlage 4 abgezweigt und in die Umgehungsleitung 19 eingeleitet werden. Das in die Umgehungsleitung 19 eingeleitete Abgas kann die Umgehungsleitung 19 durchströmen und wird mittels der Umgehungsleitung 19 unter Umgehung des SCR-Katalysators 15, das heißt ohne durch den SCR-Katalysator 15 hindurchzuströmen, zu der Einleitstelle E geführt und an der Einleitstelle E in die Abgasanlage 4 eingeleitet. Die Umgehungsleitung 19 ist Bestandteil einer auch als Bypassvorrichtung bezeichneten Umgehungseinrichtung 20, welche die Umgehungsleitung 19 umfasst. Außerdem umfasst die Umgehungseinrichtung 20 ein Ventilelement 21, welches beispielsweise in der Umgehungsleitung 19 angeordnet ist. Mittels des Ventilelements 21 kann eine Menge des die Umgehungsleitung 19 durchströmenden und dadurch den SCR-Katalysator 15 umgehenden Abgases eingestellt, insbesondere geregelt, werden. Dem Turbinenrad 6 ist eine auch als Wastegate oder Wastegatevorrichtung bezeichneten, weitere Umgehungseinrichtung 22 zugeordnet, welche eine weitere Umgehungsleitung 23 umfasst. Die weitere Umgehungsleitung 23 ist an einer zweiten Abzweigstelle A2 und an einer zweiten Einleitstelle E2 fluidisch mit der Abgasanlage 4 verbunden. Dabei ist die Abzweigstelle A2 stromauf des Turbinenrads 6 und vorzugsweise stromab der Abzweigstelle A angeordnet, und die Einleitstelle E2 ist stromab des Turbinenrads 6 und stromauf des Turbinenrads 7, insbesondere stromauf der Einleitstelle E und ganz insbesondere stromauf des SCR-Katalysators 15, angeordnet. Mittels der Umgehungsleitung 23 kann zumindest ein Teil des die Abgasanlage 4 durchströmenden Abgases an der Abzweigstelle A2 aus der Abgasanlage 4 abgezweigt und in die Umgehungsleitung 23 eingeleitet werden. Das in die Umgehungsleitung 23 eingeleitete Abgas kann die Umgehungsleitung 23 durchströmen und wird dadurch mittels der Umgehungsleitung 23 von der Abzweigstelle A2 zu der Einleitstelle E2 geführt und an der Einleitstelle E2 in die Abgasanlage 4 eingeleitet. Das die Umgehungsleitung 23 durchströmende Abgas umgeht das Turbinenrad 6. Dies bedeutet, dass das die Umgehungsleitung 23 durchströmende Abgas das Turbinenrad 6 nicht antreibt. Dabei umfasst die Umgehungseinrichtung 22 ein beispielsweise in der Umgehungsleitung 23 angeordnetes Ventilelement 24, mittels welchem eine Menge des die Umgehungsleitung 23 durchströmenden und somit das Turbinenrad 6 umgehenden Abgases einstellbar ist. Da die Abzweigstelle A2 stromauf des Turbinenrads 6 und die Einleitstelle E2 stromauf des SCR-Katalysators 15 angeordnet ist, umgeht zwar das die Umgehungsleitung 23 durchströmende Abgas das Turbinenrad 6, jedoch strömt das die Umgehungsleitung 23 durchströmende Abgas durch den SCR-Katalysator 15 und wird somit mittels des SCR-Katalysators 15 nachbehandelt. Da die Abzweigstelle A stromauf des Turbinenrads 6 und die Einleitstelle E stromab des Turbinenrads 6 und stromab des SCR-Katalysators 15 angeordnet ist, umgeht das die Umgehungsleitung 19 durchströmende Abgas sowohl den SCR-Katalysator 15 als auch das Turbinenrad 6, wodurch der SCR-Katalysator 15 insbesondere bei einer Regeneration des Partikelfilters 18 vor übermäßig hohen Temperaturen geschützt werden kann. Das Ventilelement 21 ist beispielsweise eine Klappe, insbesondere eine Abgasregelklappe. Insbesondere ist das Ventilelement 21 ein Stellorgan, mittels welchem die Menge des die Umgehungsleitung 19 durchströmenden Abgases einstellbar ist.

Die Abgasanlage 4 beziehungsweise die Verbrennungskraftmaschine 1 weist eine in Fig. 1 besonders schematisch dargestellte und auch als Dosiereinrichtung bezeichnete Einbringeinrichtung 25 auf, mittels welcher an einer Einbringstelle E3 ein Reduktionsmittel zum Entsticken des Abgases in das Abgas beziehungsweise in die Abgasanlage 4 einbringbar, insbesondere einspritzbar, ist. Bei dem Reduktionsmittel handelt es sich vorzugsweise um eine wässrige Harnstofflösung, welche Ammoniak bereitstellen kann. Im Rahmen einer SCR (selektive katalytische Reduktion) können im Abgas enthaltene Stickoxide mit dem von dem Reduktionsmittel bereitgestellten Ammoniak zu Wasser und Stickstoff reagieren. Die SCR läuft beispielsweise in dem SCR-Katalysator 15 ab und wird mittels des SCR-Katalysators 15 katalytisch bewirkt und/oder unterstützt. Dabei ist die Einbringstelle E3 stromauf des SCR-Katalysators 15 angeordnet. Bei der ersten Ausführungsform ist die Einbringstelle E3 stromauf des Turbinenrads und dabei stromauf der Abzweigstelle A2 angeordnet, wobei die Einbringstelle E3 vorzugsweise stromab der Abzweigstelle A angeordnet ist. Des Weiteren umfasst die Verbrennungskraftmaschine 1 beziehungsweise die Abgasanlage 4 eine auch als zweite Dosiereinrichtung bezeichnete, zweite Einbringeinrichtung 26, mittels welcher das Reduktionsmittel an einer Einbringstelle E4 in die Abgasanlage 4 beziehungsweise in das die Abgasanlage 4 durchströmende Abgas einbringbar, insbesondere einspritzbar, ist. Dabei ist die Einbringstelle E4 stromauf des SCR-Katalysators 16 und stromab des SCR-Katalysators 15, insbesondere stromab des Turbinenrads 7 angeordnet. Bei dem in Fig. 1 gezeigten Ausführungsbeispiel ist die Einbringstelle E4 stromab des Oxidationskatalysators 17 und stromab des Partikelfilters 18 angeordnet.

Bei der in Fig. 1 gezeigten ersten Ausführungsform wird die erste Turbine beziehungsweise das erste Turbinenrad 6 als Mischvorrichtung genutzt, um das mittels der Einbringeinrichtung 25 an der Einbringstelle E3 in das Abgas eingebrachte Reduktionsmittel möglichst gleichmäßig mit dem Abgas zu mischen. Somit kann insbesondere dadurch, dass die Einbringstelle E3 stromauf des Turbinenrads 6 angeordnet ist, eine separate Mischvorrichtung vermieden werden. Vorzugsweise ist der erste SCR-Katalysator 15 unmittelbar nach der ersten Turbine beziehungsweise nach dem ersten Turbinenrad 6 angeordnet. Vorzugsweise ist die erste Turbine beziehungsweise das erste Turbinenrad 6 klein ausgeführt, um ein vorteilhaftes Ansprechverhalten realisieren zu können. Ein durch das kleine Turbinenrad 6 bewirktes Temperaturverlust des Abgases ist gering, sodass der erste SCR-Katalysator 15 schnell anspringt, das heißt beispielsweise bei einer Warmlaufphase nach einem Kaltstart besonders schnell erwärmt und dadurch besonders schnell auf eine hinreichend hohe Temperatur, insbesondere Anspringtemperatur, gebracht werden kann. Ein Betriebsbereich des SCR-Katalysators 15 ist jedoch im Vergleich zu herkömmlichen Lösungen nach oben hin deutlich ausgeweitet, sodass der erste SCR-Katalysator 15 erst bei sehr hohen, auch als Motorlasten bezeichneten Lasten der Verbrennungskraftmaschine 1 über die Umgehungsleitung 19 umgangen wird.

Vorzugsweise ist die Umgehungsleitung 23, insbesondere die Umgehungseinrichtung 22, in die erste Turbine, insbesondere in deren Turbinengehäuse, integriert. Beispielsweise werden das Ventilelement 24 und somit die Umgehungsleitung 23 unmittelbar nach einem Kaltstart der Verbrennungskraftmaschine 1 für kurze Zeit geöffnet. Dadurch wird eine Enthalphienentnahme durch das erste, kleine Turbinenrad 6 für kurze Zeit eliminiert, wodurch der erste SCR-Katalysator 15 besonders schnell auf seine vorteilhafte Betriebstemperatur gebracht werden kann.

Eine separate, insbesondere bezüglich der zweiten Turbine externe Bypassvorrichtung beziehungsweise Umgehungseinrichtung ist nicht erforderlich, da eine Bypassvorrichtung der zweistufigen Aufladung selbst genutzt werden kann. Dies bedeutet, dass beispielsweise dann, wenn Massenströme des Abgases bei hohen Motorlasten eine entsprechende Grenze der kleinen, ersten Turbine überschreiten, die erste Turbine beziehungsweise das erste Turbinenrad 6, insbesondere über die Umgehungsleitung 19, umgangen wird, wobei dann die gegenüber der ersten Turbine größere zweite Turbine beziehungsweise das gegenüber dem ersten Turbinenrad 6 größere, zweite Turbinenrad 7 die Aufladung der Verbrennungskraftmaschine 1 vollständig übernimmt. Damit ist gleichzeitig gewährleistet, dass auch der erste SCR-Katalysator 15 über die Umgehungsleitung 19 umgangen und somit thermisch nicht überlastet wird.

Darüber hinaus kann ein vorteilhaftes Ansprechverhalten der ersten Turbine und somit des ersten Abgasturboladers 8 realisiert werden, da stromauf des Abgasturboladers 8 beziehungsweise der ersten Turbine, insbesondere des ersten Turbinenrads 6, keine zusätzliche thermische Masse beispielsweise in Form eines Katalysators, angeordnet ist. Wie aus Fig. 1 erkennbar ist, ist es vorzugsweise vorgesehen, dass die Abgasanlage 4 beziehungsweise die Verbrennungskraftmaschine 1 frei von einem stromauf des SCR-Katalysators 15, insbesondere stromauf des Turbinenrads 6, angeordneten Abgasnachbehandlungselement zum Nachbehandeln des Abgases ist. Es ist denkbar, eine zusätzliche, zum Beispiel elektrisch antreibbare oder angetriebene Aufladevorrichtung zu verwenden, um beispielsweise die Luft zu verdichten, wobei gegebenenfalls auf eine solche, elektrisch angetriebene Aufladevorrichtung verzichtet werden kann, wodurch ein einfacher Aufbau realisiert werden kann.

Grundsätzlich ist es denkbar, dass der Partikelfilter 18 eine für die SCR (selektive katalytische Reduktion) katalytisch wirksame Beschichtung aufweist, und somit als ein so genannter SCR-Filter (SCRF) beziehungsweise als ein SDPF ausgebildet ist. Weitere Systemvorteile können jedoch dadurch realisiert werden, dass der Partikelfilter 18 vorzugsweise vollständig frei von einer für die SCR katalytisch wirksamen Beschichtung ist, sodass der Partikelfilter 18 vorzugsweise als konventioneller Partikelfilter, insbesondere als konventioneller Dieselpartikelfilter, ohne für die SCR katalytisch wirksame Beschichtung ausgebildet ist. Dies bringt erhebliche Vorteile bezüglich Rußabbrandtemperatur und Rußabbranddauer, Filtrationseffizienz, Abgasgegendruck und Dauerhaltbarkeit mit sich. Der vorzugsweise als Dieselpartikelfilter ausgebildete Partikelfilter 18 ist stromab des vorzugsweise als Diesel-Oxidationskatalysator ausgebildeten Oxidationskatalysators 17 angeordnet, welcher wiederum stromab des zweiten, großen Turbinenrads 7 angeordnet ist.

Ein großer Vorteil der Abgasanlage 4 beziehungsweise der Verbrennungskraftmaschine 1 ist, dass der erste SCR-Katalysator 15 sehr schnell seine Betriebstemperatur erreicht, ohne hierfür übermäßig aufwendige und kraftstoffverbrauchsintensive Heizmaßnahmen verwenden zu müssen, welche vermieden oder besonders gering gehalten werden können. Dadurch können der Kraftstoffverbrauch und somit die CO₂-Emissionen der Verbrennungskraftmaschine 1 besonders gering gehalten werden. Gleichzeitig kann sichergestellt werden, dass der erste SCR-Katalysator 15 beziehungsweise dessen Temperatur nicht über eine zulässige Temperatur-Obergrenze kommt, sondern der SCR-Katalysator 15 beziehungsweise dessen Temperatur unterschreitet die zulässige Temperatur-Obergrenze möglichst lange. Damit wird der Zeitpunkt, zu oder ab welchem der erste SCR-Katalysator 15 über die Umgehungsleitung 19 umgangen wird, weitestgehend ausgedehnt und ein Betriebsbereich, in welchem beide SCR-Katalysatoren 15 und 16 arbeiten, mithin das Abgas entsticken, kann auf ein Maximum ausgeweitet werden.

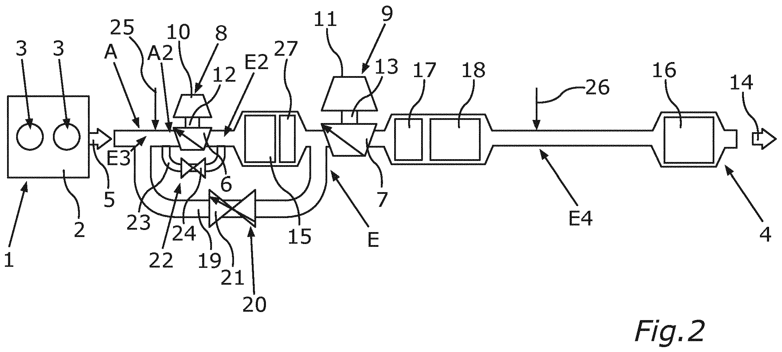

Fig. 2 zeigt in einer schematischen Darstellung eine zweite Ausführungsform der Verbrennungskraftmaschine 1. Die zweite Ausführungsform unterscheidet sich insbesondere dadurch von der ersten Ausführungsform, dass die Abgasanlage 4 ein weiteres Abgasnachbehandlungselement vorliegend in Form eines Ammoniak-Schlupfkatalysators 27 (ASC) der Ammoniak-Schlupfkatalysator 27 ist ein weiteres, von dem Abgas durchströmbares und katalytisch wirksames Abgasnachbehandlungselement, welches insbesondere dazu ausgebildet ist, Ammoniak (NH₃) selektiv zu oxidieren, insbesondere zu Stickstoff (N₂) und Wasser (H₂O). Somit ist der ASC katalytisch wirksam für eine Reaktion von Ammoniak insbesondere mit dem im Abgas enthaltenen Sauerstoff zu Stickstoff und Wasser, sodass der Ammoniak-Schlupfkatalysator 27 diese Reaktion katalytisch unterstützt und/oder bewirkt. Hierdurch kann ein übermäßiger Ammoniak-Schlupf, beispielsweise resultierend daraus, dass an der Einbringstelle E3 das Reduktionsmittel eingebracht wird, vermieden werden. Es ist denkbar, dass der erste SCR-Katalysator 15 und der ASC in einem gemeinsamen Gehäuse angeordnet sind und somit beispielsweise ein Abgasnachbehandlungsmodul bilden. Alternativ oder zusätzlich ist es möglich, dass der SCR-Katalysator 15 eine für die SCR katalytisch wirksame, erste Beschichtung aufweist, wobei der RSC beispielsweise eine zweite Beschichtung aufweist, die für die zuvor genannte Reaktion von Ammoniak insbesondere mit Sauerstoff zu Stickstoff und Wasser katalytisch wirksam ist. Dabei kann vorgesehen sein, dass die erste Beschichtung und die zweite Beschichtung in dem zuvor genannten, gemeinsamen Gehäuse angeordnet sind und/oder die erste Beschichtung und die zweite Beschichtung sind in Strömungsrichtung des Abgases aufeinander folgend angeordnet, insbesondere beispielsweise derart, dass die erste Beschichtung und die zweite Beschichtung in Strömungsrichtung des Abgases voneinander beabstandet sind, oder dass die erst Beschichtung und die zweite Beschichtung in Strömungsrichtung des Abgases direkt beziehungsweise unmittelbar aufeinander folgen, sodass in Strömungsrichtung des Abgases zwischen der ersten Beschichtung und der zweiten Beschichtung keine andere, weitere Beschichtung und auch kein Bereich angeordnet ist, welcher frei von der ersten Beschichtung und frei von der zweiten Beschichtung ist.

Aus Fig. 2 ist erkennbar, dass der Ammoniak-Schlupfkatalysator 27 stromauf des zweiten Turbinenrads 7 insbesondere stromauf der Einleitstelle E, und stromab des ersten Turbinenrads 6, insbesondere stromab der Einleitstelle E2, angeordnet ist. Dabei ist der Ammoniak-Schlupfkatalysator 27 beziehungsweise dessen zweite Beschichtung in Strömungsrichtung des die Abgasanlage 4 durchströmenden Abgases stromab des ersten SCR-Katalysators 15 beziehungsweise stromab der ersten Beschichtung angeordnet.

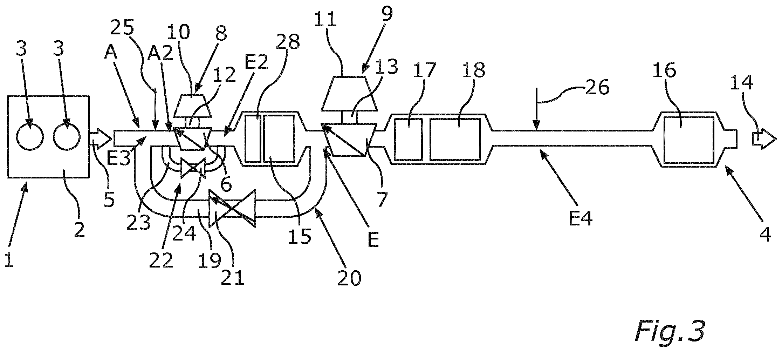

Fig. 3 zeigt in einer schematischen Darstellung eine dritte Ausführungsform der Verbrennungskraftmaschine 1. Die dritte Ausführungsform unterscheidet sich insbesondere dadurch von der ersten Ausführungsform, dass die Abgasanlage 4 ein weiteres Abgasnachbehandlungselement in Form eines elektrisch beheizbaren Katalysators 28 aufweist. Der elektrisch beheizbare Katalysator 28 ist stromab des Turbinenrads 6, insbesondere stromab der Einleitstelle E2 und stromauf des Turbinenrads 7, insbesondere stromauf der Einleitstelle E, angeordnet, wobei es vorliegend vorgesehen ist, dass der Katalysator 28 stromauf des ersten SCR-Katalysators 15 angeordnet ist. Beispielsweise weist der elektrisch beheizbare Katalysator 28 eine dritte Beschichtung auf, welche katalytisch wirksam für die SCR und/oder katalytisch wirksam für eine Oxidation von im Abgas enthaltenen Bestandteilen wie beispielsweise CO und/oder HC (unverbrannte Kohlenwasserstoffe) ist. Dabei ist beispielsweise die dritte Beschichtung stromauf der ersten Beschichtung des SCR-Katalysators 15 angeordnet. Insbesondere ist es denkbar, dass der elektrisch beheizbare Katalysator 28, insbesondere dessen dritte Beschichtung, und der erste SCR-Katalysator 15, insbesondere dessen erste Beschichtung, in einem gemeinsamen Gehäuse angeordnet sind und somit ein Abgasnachbehandlungsmodul bilden. Bei der dritten Ausführungsform ist der Katalysator 28 beziehungsweise dessen dritte Beschichtung stromauf des SCR-Katalysators 15 beziehungsweise dessen erster Beschichtung angeordnet. Dabei kann vorzugsweise vorgesehen sein, dass die erste Beschichtung und die dritte Beschichtung in Strömungsrichtung des Abgases aufeinander folgen und voneinander beabstandet sind. Alternativ ist es denkbar, dass die erste Beschichtung und die dritte Beschichtung in Strömungsrichtung des Abgases aufeinanderfolgen und dabei unmittelbar beziehungsweise direkt aufeinander folgen.

Der elektrisch beheizbare Katalysator 28 umfasst ein elektrisch betreibbares Heizelement, welches somit auch als elektrisches Heizelement bezeichnet wird. Das elektrische Heizelement kann unter Nutzung von elektrischer Energie beziehungsweise elektrischen Strom Wärme bereitstellen und dadurch den Katalysator 28 und/oder das den Katalysator 28 durchströmende Abgas unter Nutzung der elektrischen Energie beziehungsweise des elektrischen Stroms erwärmen, wodurch das Abgas beziehungsweise der erste SCR-Katalysator 15 besonderes bedarfsgerecht erwärmt werden können.

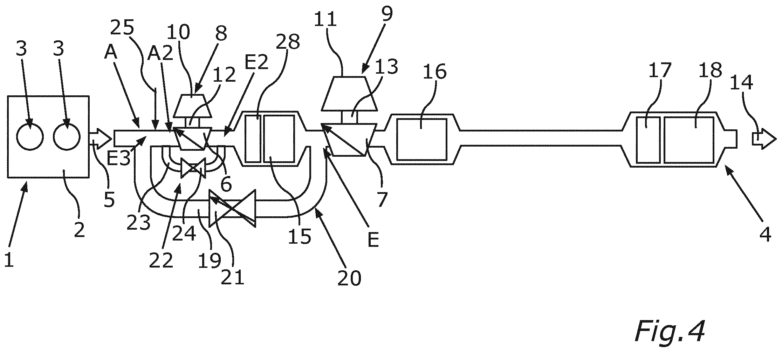

Schließlich zeigt Fig. 4 in einer schematischen Darstellung eine vierte Ausführungsform der Verbrennungskraftmaschine 1. Die vierte Ausführungsform unterscheidet sich insbesondere dadurch von der ersten Ausführungsform, dass die vierte Ausführungsform wie die dritte Ausführungsform den elektrisch beheizbaren Katalysator 28 aufweist. Ein weitere Unterschied ist, dass bei der vierten Ausführungsform die zweite Einbringeinrichtung 26 und somit die Einleitstelle E4 entfallen. Ein weiterer Unterschied ist, dass anstelle des Oxidationskatalysators 17 und des Partikelfilters 18 der zweite SCR-Katalysator 16 vorgesehen ist. Hierunter ist insbesondere folgendes zu verstehen: Das Kraftfahrzeug weist einen beispielsweise als selbsttragende Karosserie ausgebildeten Aufbau auf, welcher einen Motorraum begrenzt. In dem Motorraum ist das Motorgehäuse 2 angeordnet. Außerdem ist vorzugsweise vorgesehen, dass in dem Motorraum die Turbinenräder 6 und 7, insbesondere die Abgasturbolader 8 und 11, angeordnet sind. Außerdem ist in dem Motorraum der erste SCR-Katalysator 15 angeordnet. Im Hinblick auf die zweite und dritte Ausführungsform ist in dem Motorraum beispielsweise auch der Ammoniak-Schlupfkatalysator 27 beziehungsweise der elektrisch beheizbare Katalysator 28 angeordnet. Ferner ist es denkbar, dass auch der Oxidationskatalysator 17 und/oder der Partikelfilter 18 in dem Motorraum angeordnet sind. Bei der ersten, zweiten und dritten Ausführungsform ist der zweite SCR-Katalysator 16 ein Unterboden-Abgasnachbehandlungselement das heißt ein Unterboden-Katalysator beziehungsweise ein Unterboden-SCR-Katalysator. Dies bedeutet, dass der Aufbau einer auch als Fahrgastzelle oder Fahrgastraum bezeichneten Innenraum begrenzt, in welchem während sich einer jeweiligen Fahrt des Kraftfahrzeugs Personen wie beispielsweise der Fahrer des Kraftfahrzeugs aufhalten können. Der Innenraum ist dabei in Fahrzeughochrichtung nach unten zumindest teilweise, insbesondere zumindest überwiegend oder vollständig, durch einen auch als Hauptboden bezeichneten Boden des Aufbaus, insbesondere der selbsttragenden Karosserie, begrenzt. Dabei ist der SCR-Katalysator 16 bei der ersten, zweiten und dritten Ausführungsform außerhalb des Motorraums und in Fahrzeughochrichtung unterhalb des Bodens angeordnet, sodass bei der ersten, zweiten und dritten Ausführungsform der zweite SCR-Katalysator 16 in Fahrzeughochrichtung nach oben hin zumindest teilweise, insbesondere zumindest überwiegend oder vollständig, durch den Boden überdeckt beziehungsweise überlappt ist. Bei der vierten Ausführungsform jedoch ist der zweite SCR-Katalysator 16 ebenfalls in dem Motorraum angeordnet. Außerdem ist es bei der vierten Ausführungsform vorgesehen, dass der Oxidationskatalysator 17 und der Partikelfilter 18 als Unterboden-Abgasnachbehandlungselemente ausgebildet und demzufolge außerhalb des Motorraums und in Fahrzeughochrichtung unterhalb des auch als Unterboden bezeichneten Bodens angeordnet sind, sodass bei der vierten Ausführungsform der Oxidationskatalysator 17 und der Partikelfilter 18 in Fahrzeughochrichtung nach oben hin jeweils zumindest teilweise, insbesondere zumindest überwiegend und somit zumindest zu mehr als zur Hälfte oder aber Vollständig, durch den auch als Unterboden bezeichneten Boden überlappt beziehungsweise überdeckt sind.

Des Weiteren kann beispielsweise bei der vierten Ausführungsform vorgesehen sein, dass das durch den Pfeil 5 veranschaulichte Abgas einen insbesondere aus zumindest einem der Brennräume 3 stammenden Kraftstoffkatalysator umfasst beziehungsweise enthält, welcher auch als Fuel Borne Catalyst (FBC) bezeichnet wird. Der Kraftstoffkatalysator ist dem Kraftstoff, der in den jeweiligen Brennraum 3 eingebracht, insbesondere direkt eingespritzt wird, beigemischt oder der im Abgas enthaltene Kraftstoffkatalysator resultiert aus einem dem Kraftstoff, der in den jeweiligen Brennraum 3 eingebracht wird, beigemischten Additiv. Mit wieder anderen Worten ausgedrückt ist es denkbar, dass dem Kraftstoff, der den jeweiligen Brennraum 3 eingebracht wird, ein beziehungsweise das zuvor genannte Additiv beigemischt ist, welches den dann im Abgas enthaltenen Kraftstoffkatalysator bereitstellt beziehungsweise freisetzt, insbesondere dadurch, dass das den Kraftstoff umfassende Gemisch in dem jeweiligen Brennraum 3 verbrannt wird. Wieder mit anderen Worten ausgedrückt ist der Kraftstoffkatalysator ein dem Kraftstoff beigemengtes Additiv beziehungsweise resultiert aus einem dem Kraftstoff beigelegten Additiv, das mit dem Kraftstoff in den jeweiligen Brennraum 3 eingebracht, insbesondere eingespritzt, und daraufhin mitverbrannt wird und sich in Ruß am Partikelfilter 18 ablagert, insbesondere um eine zum Entfernen des Rußes aus dem Partikelfilter 18 erforderliche Abbrand-Temperatur des Rußes zu senken, im Vergleich zu der Verbrennungskraftmaschine 1 bei welcher der FBC nicht verwendet wird.

### Bezugszeichenliste

- 1: Verbrennungskraftmaschine
- 2: Gehäuseelement
- 3: Brennraum
- 4: Abgasanlage
- 5: Pfeil
- 6: erstes Turbinenrad
- 7: zweites Turbinenrad
- 8: erster Abgasturbolader
- 9: zweiter Abgasturbolader
- 10: erster Verdichter
- 11: zweiter Verdichter
- 12: Welle
- 13: Welle
- 14: Pfeil
- 15: erster SCR-Katalysator
- 16: zweiter SCR-Katalysator
- 17: Oxidationskatalysator
- 18: Partikelfilter
- 19: Umgehungsleitung
- 20: Umgehungseinrichtung
- 21: Ventilelement
- 22: Umgehungseinrichtung
- 23: Umgehungsleitung
- 24: Ventilelement
- 25: Einbringeinrichtung
- 26: Einbringeinrichtung
- 27: Ammoniak-Schlupfkatalysator
- 28: elektrisch beheizbarer Katalysator
- A, A2: Abzweigstelle
- E, E2: Einleitstelle
- E3, E4: Einbringstelle

## Patentansprüche

1. Verbrennungskraftmaschine (1) für ein Kraftfahrzeug, mit einer von Abgas der Verbrennungskraftmaschine (1) durchströmbaren Abgasanlage (4), welche aufweist:
- ein von dem die Abgasanlage (4) durchströmenden Abgas der Verbrennungskraftmaschine (1) antreibbares, erstes Turbinenrad (6);
- ein von dem Abgas antreibbares, zweites Turbinenrad (7), welches in Strömungsrichtung des die Abgasanlage (4) durchströmenden Abgases stromab des ersten Turbinenrads (6) angeordnet ist,
- mehrere, von dem Abgas durchströmbare und zum Nachbehandeln des Abgases ausgebildete Abgasnachbehandlungselemente, von welchen wenigstens ein Abgasnachbehandlungselement als ein SCR-Katalysator (15) ausgebildet ist, welcher der in Strömungsrichtung des die Abgasanlage (4) durchströmenden Abgases erste, von dem Abgas durchströmbare SCR-Katalysator der Abgasanlage (4) ist, wobei der erste SCR-Katalysator (15) in Strömungsrichtung des die Abgasanlage (4) durchströmenden Abgases stromauf des zweiten Turbinenrads (7) und stromab des ersten Turbinenrads (6) angeordnet ist, und
- wenigstens eine, an einer stromauf des ersten Turbinenrads (6) angeordneten Abzweigstelle (A) und an einer stromab des ersten SCR-Katalysators (15) angeordneten Einleitstelle (E) fluidisch mit der Abgasanlage (4) verbundene Umgehungsleitung (19), mittels welcher an der Abzweigstelle (A) zumindest ein Teil des die Abgasanlage (4) durchströmenden Abgases aus der Abgasanlage (4) abzweigbar, unter Umgehung des ersten SCR-Katalysators (15) zu der Einleitstelle (E) zu führen und an der Einleitstelle (E) in die Abgasanlage (4) einleitbar ist;
**gekennzeichnet durch**
eine an einer stromauf des ersten Turbinenrads (6) und stromab der Abzweigstelle (A) angeordneten, zweiten Abzweigstelle (A2) und an einer stromauf des ersten SCR-Katalysators (15) und stromab des ersten Turbinenrads (6) angeordneten, zweiten Einleitstelle (E2) fluidisch mit der Abgasanlage (4) verbundene, zweite Umgehungsleitung (19), mittels welcher an der zweiten Abzweigstelle (A2) zumindest ein Teil des die Abgasanlage (4) durchströmenden Abgases aus der Abgasanlage (4) abzweigbar, unter Umgehung des ersten Turbinenrads (6) zu der zweiten Einleitstelle (E2) zu führen und an der zweiten Einleitstelle (E2) in die Abgasanlage (4) einleitbar ist.

2. Verbrennungskraftmaschine (1) nach Anspruch 1,
**dadurch gekennzeichnet, dass**
die Einleitstelle (E) stromauf der zweiten Turbinenrads (7) angeordnet ist.

3. Verbrennungskraftmaschine (1) nach Anspruch 1 oder 2,
**dadurch gekennzeichnet, dass**
mit Ausnahme des ersten SCR-Katalysators (15) alle Abgasnachbehandlungselemente (16, 17, 18) der Abgasanlage (4) stromab des zweiten Turbinenrads (7) angeordnet sind.

4. Verbrennungskraftmaschine (1) nach einem der vorhergehenden Ansprüche,
**dadurch gekennzeichnet, dass**
ein weiteres der Abgasnachbehandlungselemente als ein stromab des zweiten Turbinenrads (7) angeordneter Partikelfilter (18) ausgebildet ist.

5. Verbrennungskraftmaschine (1) nach Anspruch 4,
**dadurch gekennzeichnet, dass**
der Partikelfilter (18) stromab der Einleitstelle (E) angeordnet ist.

6. Verbrennungskraftmaschine (1) nach einem der vorhergehenden Ansprüche,
**dadurch gekennzeichnet, dass**
ein weiteres der Abgasnachbehandlungselemente als ein zweiter, stromab des zweiten Turbinenrads (7) angeordneter SCR-Katalysator (16) ausgebildet ist.

7. Verbrennungskraftmaschine (1) nach Anspruch 6 in dessen Rückbezug auf Anspruch 4 oder 5,
**dadurch gekennzeichnet, dass**
der zweite SCR-Katalysator (16) stromab des Partikelfilters (18) angeordnet ist.

8. Verbrennungskraftmaschine (1) nach einem der vorhergehenden Ansprüche,
**dadurch gekennzeichnet, dass**
ein weiteres der Abgasnachbehandlungselemente als ein stromab des zweiten Turbinenrads (7) angeordneter Oxidationskatalysator (17) ausgebildet ist.

9. Verbrennungskraftmaschine (1) nach Anspruch 8 in dessen Rückbezug auf Anspruch 6 oder 7,
**dadurch gekennzeichnet, dass**
der Oxidationskatalysator (17) stromauf des zweiten SCR-Katalysators (16) angeordnet ist.

10. Verbrennungskraftmaschine (1) nach einem der vorhergehenden Ansprüche,
**gekennzeichnet durch**
wenigstens eine Dosiereinrichtung (25), mittels welcher an einer stromauf des ersten SCR-Katalysators (15) angeordneten Einbringstelle (E3) ein Reduktionsmittel zum Entsticken des Abgases in das Abgas einbringbar ist.

11. Verbrennungskraftmaschine (1) nach einem der vorhergehenden Ansprüche,
**dadurch gekennzeichnet, dass**
ein weiteres der Abgasnachbehandlungselemente als ein Ammoniak-Schlupfkatalysator (27) ausgebildet ist, welcher stromauf des zweiten Turbinenrads (7) und stromab des ersten Turbinenrads (6) angeordnet ist.

12. Verbrennungskraftmaschine (1) nach einem der vorhergehenden Ansprüche,
**dadurch gekennzeichnet, dass**
ein weiteres der Abgasnachbehandlungselemente als ein elektrisch beheizbarer Katalysator (28) ausgebildet ist, welcher stromab des ersten Turbinenrads (6) und stromauf des zweiten Turbinenrads (7) angeordnet ist.

13. Verbrennungskraftmaschine (1) nach einem der vorhergehenden Ansprüche,
**dadurch gekennzeichnet, dass**
das Abgas einen aus zumindest einem Brennraum (3) der Verbrennungskraftmaschine stammenden Kraftstoffkatalysator enthält, welcher einem in den Brennraum (3) eingebrachten und zum Betreiben der Verbrennungskraftmaschine (3) in einem befeuerten Betrieb der Verbrennungskraftmaschine (3) vorgesehenen Kraftstoff beigemischt ist oder aus einem dem Kraftstoff beigemischten Additiv resultiert.

14. Kraftfahrzeug, mit einer Verbrennungskraftmaschine (1) nach einem der vorhergehenden Ansprüche.

## Claims

1. Internal combustion engine (1) for a motor vehicle, having an exhaust system (4) through which exhaust gas of the internal combustion engine (1) can flow and which has:
- a first turbine wheel (6) which can be driven by the exhaust gas, which flows through the exhaust system (4), of the internal combustion engine (1);
- a second turbine wheel (7) which can be driven by the exhaust gas and which is arranged downstream of the first turbine wheel (6) in the direction of flow of the exhaust gas flowing through the exhaust system (4),
- a plurality of exhaust gas aftertreatment elements through which the exhaust gas can flow and which are designed for the aftertreatment of the exhaust gas and of which at least one exhaust gas aftertreatment element is in the form of an SCR catalytic converter (15) which, in the direction of flow of the exhaust gas flowing through the exhaust system (4), is the first SCR catalytic converter, through which the exhaust gas can flow, of the exhaust system (4), wherein the first SCR catalytic converter (15) is arranged upstream of the second turbine wheel (7) and downstream of the first turbine wheel (6) in the direction of flow of the exhaust gas flowing through the exhaust system (4), and
- at least one bypass line (19), which is fluidically connected to the exhaust system (4) at a branch point (A) arranged upstream of the first turbine wheel (6) and at an introduction point (E) arranged downstream of the first SCR catalytic converter (15), by means of which at least some of the exhaust gas flowing through the exhaust system (4) can be branched off from the exhaust system (4) at the branch point (A), to be guided, bypassing the first SCR catalytic converter (15), to the introduction point (E) and can be introduced into the exhaust system (4) at the introduction point (E);
**characterized by**
a second bypass line (19) which is fluidically connected to the exhaust system (4) at a second branch point (A2) arranged upstream of the first turbine wheel (6) and downstream of the branch point (A) and at a second introduction point (E2) arranged upstream of the first SCR catalytic converter (15) and downstream of the first turbine wheel (6), by means of which at least some of the exhaust gas flowing through the exhaust system (4) can be branched off from the exhaust system (4) at the second branch point (A2), to be guided, bypassing the first turbine wheel (6), to the second introduction point (E2) and can be introduced into the exhaust system (4) at the second introduction point (E2).

2. Internal combustion engine (1) according to Claim 1,
**characterized in that**
the introduction point (E) is arranged upstream of the second turbine wheel (7).

3. Internal combustion engine (1) according to Claim 1 or 2,
**characterized in that**,
with the exception of the first SCR catalytic converter (15), all of the exhaust gas aftertreatment elements (16, 17, 18) of the exhaust system (4) are arranged downstream of the second turbine wheel (7).

4. Internal combustion engine (1) according to one of the preceding claims,
**characterized in that**
a further of the exhaust gas aftertreatment elements is in the form of a particle filter (18) arranged downstream of the second turbine wheel (7).

5. Internal combustion engine (1) according to Claim 4,
**characterized in that**
the particle filter (18) is arranged downstream of the introduction point (E).

6. Internal combustion engine (1) according to one of the preceding claims,
**characterized in that**
a further of the exhaust gas aftertreatment elements is in the form of a second SCR catalytic converter (16) arranged downstream of the second turbine wheel (7).

7. Internal combustion engine (1) according to Claim 6 when referring back to Claim 4 or 5,
**characterized in that**
the second SCR catalytic converter (16) is arranged downstream of the particle filter (18).

8. Internal combustion engine (1) according to one of the preceding claims,
**characterized in that**
a further of the exhaust gas aftertreatment elements is in the form of an oxidation catalytic converter (17) arranged downstream of the second turbine wheel (7).

9. Internal combustion engine (1) according to Claim 8 when referring back to Claim 6 or 7,
**characterized in that**
the oxidation catalytic converter (17) is arranged upstream of the second SCR catalytic converter (16).

10. Internal combustion engine (1) according to one of the preceding claims,
**characterized by**
at least one metering device (25) by means of which a reducing agent for denitrification of the exhaust gas can be introduced into the exhaust gas at an introduction point (E3) arranged upstream of the first SCR catalytic converter (15).

11. Internal combustion engine (1) according to one of the preceding claims,
**characterized in that**
a further of the exhaust gas aftertreatment elements is in the form of an ammonia slip catalytic converter (27) which is arranged upstream of the second turbine wheel (7) and downstream of the first turbine wheel (6).

12. Internal combustion engine (1) according to one of the preceding claims,
**characterized in that**
a further of the exhaust gas aftertreatment elements is in the form of an electrically heatable catalytic converter (28) which is arranged downstream of the first turbine wheel (6) and upstream of the second turbine wheel (7).

13. Internal combustion engine (1) according to one of the preceding claims,
**characterized in that**
the exhaust gas contains a fuel catalyst which originates from at least one combustion chamber (3) of the internal combustion engine and which is admixed with a fuel introduced into the combustion chamber (3) and provided for operating the internal combustion engine (3) in a fired operation of the internal combustion engine (3), or results from an additive admixed with the fuel.

14. Motor vehicle, having an internal combustion engine (1) according to one of the preceding claims.

## Revendications

1. Moteur à combustion interne (1) pour un véhicule automobile, avec un système d'échappement (4) pouvant être traversé par les gaz d'échappement du moteur à combustion interne (1), qui présente :
- une première roue de turbine (6) pouvant être entraînée par les gaz d'échappement du moteur à combustion interne (1) traversant le système d'échappement (4) ;
- une deuxième roue de turbine (7) pouvant être entraînée par les gaz d'échappement, qui est agencée en aval de la première roue de turbine (6) dans la direction d'écoulement des gaz d'échappement traversant le système d'échappement (4),
- plusieurs éléments de post-traitement des gaz d'échappement pouvant être traversés par les gaz d'échappement et configurés pour le post-traitement des gaz d'échappement, dont au moins un élément de post-traitement des gaz d'échappement est configuré sous la forme d'un catalyseur SCR (15), qui est le premier catalyseur SCR du système d'échappement (4) pouvant être traversé par les gaz d'échappement dans la direction d'écoulement des gaz d'échappement traversant le système d'échappement (4), le premier catalyseur SCR (15) étant agencé en amont de la deuxième roue de turbine (7) et en aval de la première roue de turbine (6) dans la direction d'écoulement des gaz d'échappement traversant le système d'échappement (4), et
- au moins une conduite de contournement (19) reliée fluidiquement au système d'échappement (4) au niveau d'un point de dérivation (A) agencé en amont de la première roue de turbine (6) et au niveau d'un point d'introduction (E) agencé en aval du premier catalyseur SCR (15), au moyen de laquelle au moins une partie des gaz d'échappement traversant le système d'échappement (4) peut être dérivée du système d'échappement (4) au niveau du point de dérivation (A), être acheminée vers le point d'introduction (E) en contournant le premier catalyseur SCR (15) et être introduite dans le système d'échappement (4) au niveau du point d'introduction (E) ;
**caractérisé par**
une deuxième conduite de dérivation (19) reliée fluidiquement au système d'échappement (4) au niveau d'un deuxième point de dérivation (A2) agencé en amont de la première roue de turbine (6) et en aval du point de dérivation (A) et au niveau d'un deuxième point d'introduction (E2) agencé en amont du premier catalyseur SCR (15) et en aval de la première roue de turbine (6), au moyen de laquelle au moins une partie des gaz d'échappement traversant le système d'échappement (4) peut être dérivée du système d'échappement (4) au niveau du deuxième point de dérivation (A2), être acheminée vers le deuxième point d'introduction (E2) en contournant la première roue de turbine (6) et être introduite dans le système d'échappement (4) au niveau du deuxième point d'introduction (E2).

2. Moteur à combustion interne (1) selon la revendication 1,
**caractérisé en ce que**
le point d'introduction (E) est agencé en amont de la deuxième roue de turbine (7).

3. Moteur à combustion interne (1) selon la revendication 1 ou 2,
**caractérisé en ce**
**qu'**à l'exception du premier catalyseur SCR (15), tous les éléments de post-traitement des gaz d'échappement (16, 17, 18) du système d'échappement (4) sont agencés en aval de la deuxième roue de turbine (7).

4. Moteur à combustion interne (1) selon l'une quelconque des revendications précédentes,
**caractérisé en ce**
**qu'**un autre des éléments de post-traitement des gaz d'échappement est configuré sous la forme d'un filtre à particules (18) agencé en aval de la deuxième roue de turbine (7).

5. Moteur à combustion interne (1) selon la revendication 4,
**caractérisé en ce que**
le filtre à particules (18) est agencé en aval du point d'introduction (E).

6. Moteur à combustion interne (1) selon l'une quelconque des revendications précédentes,
**caractérisé en ce**
**qu'**un autre des éléments de post-traitement des gaz d'échappement est configuré sous la forme d'un deuxième catalyseur SCR (16) agencé en aval de la deuxième roue de turbine (7).

7. Moteur à combustion interne (1) selon la revendication 6 lorsqu'elle se réfère à la revendication 4 ou 5,
**caractérisé en ce que**
le deuxième catalyseur SCR (16) est agencé en aval du filtre à particules (18).

8. Moteur à combustion interne (1) selon l'une quelconque des revendications précédentes,
**caractérisé en ce**
**qu'**un autre des éléments de post-traitement des gaz d'échappement est configuré sous la forme d'un catalyseur d'oxydation (17) agencé en aval de la deuxième roue de turbine (7).

9. Moteur à combustion interne (1) selon la revendication 8 lorsqu'elle se réfère à la revendication 6 ou 7,
**caractérisé en ce que**
le catalyseur d'oxydation (17) est agencé en amont du deuxième catalyseur SCR (16).

10. Moteur à combustion interne (1) selon l'une quelconque des revendications précédentes,
**caractérisé par**
au moins un dispositif de dosage (25), au moyen duquel un agent réducteur peut être chargé dans les gaz d'échappement au niveau d'un point de chargement (E3) agencé en amont du premier catalyseur SCR (15) pour dénitrifier les gaz d'échappement.

11. Moteur à combustion interne (1) selon l'une quelconque des revendications précédentes,
**caractérisé en ce**
**qu'**un autre des éléments de post-traitement des gaz d'échappement est configuré sous la forme d'un catalyseur de glissement d'ammoniac (27), qui est agencé en amont de la deuxième roue de turbine (7) et en aval de la première roue de turbine (6).

12. Moteur à combustion interne (1) selon l'une quelconque des revendications précédentes,
**caractérisé en ce**
**qu'**un autre des éléments de post-traitement des gaz d'échappement est configuré sous la forme d'un catalyseur (28) pouvant être chauffé électriquement, qui est agencé en aval de la première roue de turbine (6) et en amont de la deuxième roue de turbine (7).

13. Moteur à combustion interne (1) selon l'une quelconque des revendications précédentes,
**caractérisé en ce que**
les gaz d'échappement contiennent un catalyseur de carburant provenant d'au moins une chambre de combustion (3) du moteur à combustion interne, qui est mélangé à un carburant chargé dans la chambre de combustion (3) et prévu pour faire fonctionner le moteur à combustion interne (3) dans un mode de fonctionnement à feu du moteur à combustion interne (3) ou qui résulte d'un additif mélangé au carburant.

14. Véhicule automobile, avec un moteur à combustion interne (1) selon l'une quelconque des revendications précédentes.
